# EUROPEAN PATENT APPLICATION

(11) **EP 4 589 756 A1**
(43) Date of publication of application: **23.07.2025**
(21) Application number: 24305111.7
(22) Date of filing: 17.01.2024
(51) Int. Cl.: H01M 50/536, H01M 50/533, H01M 50/538, H01M 50/528

(54) **COLLECTOR PLATE FOR A BATTERY CELL**

(71) Applicant: Automotive Cells Company SE, 33520 Bruges (FR)
(72) Inventor: MATHIEU, Alexandre, 33300 BORDEAUX (FR); ARDRINO, Thomas, 40230 TOSSE (FR); MA, Sang-Hyuk, 33700 MERIGNAC (FR)
(74) Representative: Lavoix

(57) **Abstract**

The collector plate (30) is formed by a thin conductive sheet bent into a first part (30A) and a second part (30B). The collector plate (30) comprises a reinforcing corner rib (42) at the angle between the first part (30A) and the second part (30B).

## Description

The present invention relates to a collector plate for a battery cell.

Known battery cells comprise a stack of electrodes, two connection terminals, and two collector plates each connecting the electrodes of a same polarity with a respective connexion terminal. Each collector plate comprises a fist part connected to the electrodes, and a second part connected to the corresponding terminal.

The first part is held to the electrodes by tabs welded on the collector plate. In order to weld the tabs, a high force must be applied to press the tabs on the collector plate. The collector has to be able to withstand the force to ensure that the pressure force is high enough, thus to ensure a good welding quality.

The invention is intended to provide a collector plate allowing an optimal welding quality.

To this end, the invention relates to a collector plate for a battery cell, formed by a thin conductive sheet bent into a first part and a second part, characterized in that the collector plate comprises a reinforcing corner rib at the angle between the first part and the second part.

The stamp on the first part has a stiffening function that ensure the collector plate can withstand a high force during welding the tabs.

A collector plate according to the invention may also comprise any of the following features, taken alone or in any possible combination.
- The reinforcing corner rib extends on at least 10% of the collector plate length.
- The first part comprises a stamped rib, extending along the first part.
- The stamped rib is arranged in a central area of the first part.
- The stamped rib extends on more than 50% of the length of the first part, for example more than 90%.
- The rib goes out at the bottom of the first part.
- The second part comprises a notch on a free end opposite to the first part.

The invention also relates to a battery cell, comprising a casing closed by a lid, the casing comprising an electrode stack, characterized in that the battery cell comprises at least one collector plate according to any of preceding claims, having its first part connected to the electrode stack and its second part connected to a connexion terminal.

Preferentially, the electrode stack comprises tabs welded to the first part.

Preferentially, the first part comprises a stamped rib, extending along the first part, the tabs being welded to the first part from either side of the stamped rib.

The invention also relates to an energy storage cell comprising a collector plate as disclosed above.

Several aspects and advantages of the invention will be enlighten in the following disclosure, given only as a non limitative example and made in reference to the attached figures, in which:
- Figure 1 is a perspective view of a battery cell according to an embodiment of the invention;
- Figure 2 is a perspective view of a collector plate equipping the cell of Figure 1.

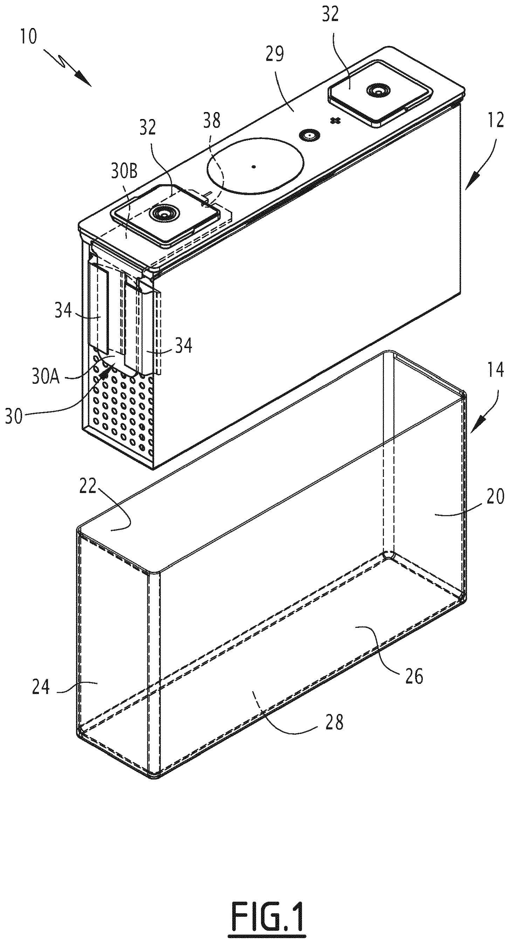

Figure 1 shows a battery cell 10 for energy storage. The battery cell 10 comprises an electrical module 12 and a casing 14 for housing the electrical module 12. The casing 14 is preferentially a metallic casing.

The casing 14 comprises four lateral faces 20, 22, 24, 26, a bottom face 28. A lid 29 is intended to close the casing 14.

The casing 14, when closed, is leaktight, and it is filled with an electrolyte in which the module 12 is immersed.

In a known manner, the electrical module 12 comprises a stack of electrodes (not shown). The stack of electrodes has usually a parallelepiped shape and it is wrapped in a protective packing. For instance, the protective packing is made of a polymer film, and it is advantageously porous and permeable to the electrolyte.

The battery cell 10 comprises two collector plates 30 intended to connect together the electrodes of a same polarity.

Each collector plate 30 is connected to a respective connexion terminal 32 of the battery cell 10. The connexion terminals 32 are mounted on the lid 29.

Each collector plate 30 is formed by a thin conductive sheet, for example a metal sheet, bent into two parts, in particular a first part 30A and a second part 30B. The first part 30A and the second part 30B substantially form together a right angle.

The first part 30A is connected to the electrodes and the second part 30B is connected to the connexion terminal 32.

The electrical module 12 comprises tabs 34 intending to be welded with the first part 30A. The tabs 34 are also electrically connected to the electrodes.

The tabs 34 are folded and welded to the first part 30A, for example laser welded.

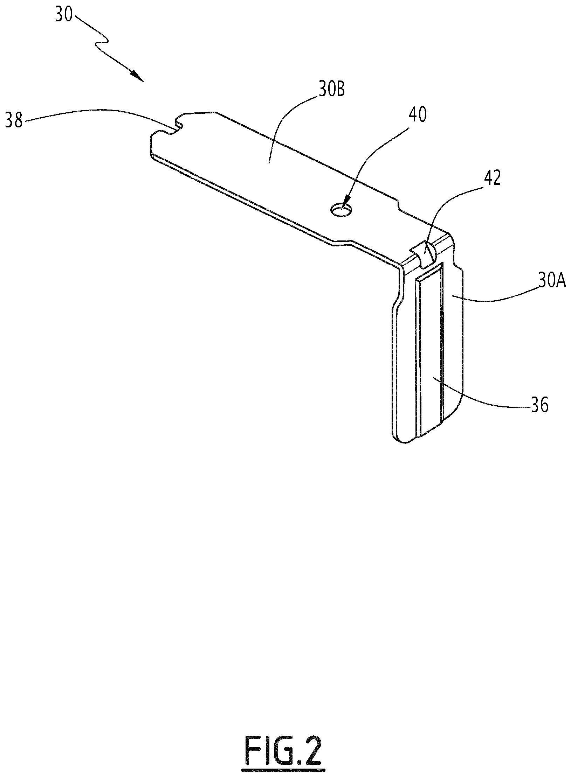

The collector plate 30 preferentially comprises, on the first part 30A, an optional stamped rib 36 (shown on figure 2), extending along the first part 30A, on more than 50% of its length, for example more than 90% of its lenght. The stamped rib 36 is preferentially arranged on a central area of the first part 30A.

Preferentially, the rib 36 goes out at the bottom of the first part 30A, to simplify the stamping feasibility.

The second part 30B comprises a notch 38 on a free end opposite to the first part 30A for guiding the positioning of the collector plate 30, and blocking the collector plate 30 in rotation.

The connection terminals 32 are connected to the collector plate 30 by welding, the welding being preferentially done in a central area of the second part 30B of the collector plates 30. Preferentially, the second part 30B comprises a hole 40 for receiving a locating pin, ensuring the good positioning of this second part 30B.

Each collector plate 30 also comprises a reinforcing corner rib 42 at the angle between the first part 30A and the second part 30B. This allow preventing twist and deformation of the collector plate 30. The reinforcing corner rib 42 is for example formed by stamping.

Preferentially, the reinforcing corner rib 42 extends on at least 10% of the collector plate 30 length.

Because of the reinforcing corner rib 42, and preferentially of the stamped rib 36, the collector plate 30 is stiffened to allow it being firmly pressed with the tabs, thus simplify welding process and improve welding quality.

It also should be noticed that the thickness of the collector plate 30 may be reduced in regards to a collector from prior art. For example, the collector plate 30 has a thickness inferior to 2 mm.

Reference numbers:
- 10: - Battery cell
- 12: - Electrical module
- 14: - Casing
- 20, 22, 24, 26: - Lateral faces
- 28: - Bottom face
- 29: - Lid
- 30: - Collector plate
- 30A: - First part
- 30B: - Second part
- 32: - Connexion terminal
- 34: - Tab
- 36: - Stamped rib
- 38: - Notch
- 40: - Hole
- 42: - Reinforcing corner rib

## Claims

1. A collector plate (30) for a battery cell (10), formed by a thin conductive sheet bent into a first part (30A) and a second part (30B), **characterized in that** the collector plate (30) comprises a reinforcing corner rib (42) at the angle between the first part (30A) and the second part (30B).

2. The collector plate (30) of claim 1, wherein the reinforcing corner rib (42) extends on at least 10% of the collector plate (30) length.

3. The collector plate (30) of claim 1 or 2, wherein the first part (30A) comprises a stamped rib (36), extending along the first part (30A).

4. The collector plate (30) of claim 3, wherein the stamped rib (36) is arranged in a central area of the first part (30A).

5. The collector plate (30) of claim 3 or 4, wherein the stamped rib (36) extends on more than 50% of the length of the first part (30A), for example more than 90%.

6. The collector plate (30) of any of claims 3 to 5, wherein the rib (36) goes out at the bottom of the first part (30A).

7. The collector plate (30) of any of preceding claims, wherein the second part (30B) comprises a notch (38) on a free end opposite to the first part (30A).

8. A battery cell (10), comprising a casing (14) closed by a lid (29), the casing (14) comprising an electrode stack, **characterized in that** the battery cell (10) comprises at least one collector plate (30) according to any of preceding claims, having its first part (30A) connected to the electrode stack and its second part (30B) connected to a connexion terminal (32).

9. The battery cell (10) according to claim 8, wherein the electrode stack comprises tabs (34) welded to the first part (30A).

10. The battery cell (10) according to claim 9, wherein the first part (30A) comprises a stamped rib (36), extending along the first part (30A), the tabs (34) being welded to the first part (30A) from either side of the stamped rib (36).
